# EUROPÄISCHE PATENTSCHRIFT

(11) **EP 1 136 523 B1**
(45) Veröffentlichungstag und Bekanntmachung des Hinweises auf die Patenterteilung: **12.07.2006**
(21) Anmeldenummer: 01106533.1
(22) Anmeldetag: 15.03.2001
(51) Int. Cl.: C08K 3/00, C08L 91/06, C08L 91/08, C08L 23/30, D06M 13/02

(54) **Wässrige, geruchsneutrale Wachsdispersionen**
Low-smell aqueous wax dispersions
Dispersions aqueuses de cire d'odeur neutre

(30) Priorität: 24.03.2000 DE 10014732
(43) Veröffentlichungstag der Anmeldung: 26.09.2001
(73) Patentinhaber: Cognis IP Management GmbH, 40589 Düsseldorf (DE)
(72) Erfinder: Uphues, Günter, 40789 Monheim (DE); Cornils, Marion, 42655 Solingen (DE)

(56) Entgegenhaltungen:
- DE-A- 4 441 029
- US-A- 4 675 022
- US-A- 5 601 746

## Beschreibung

Die vorliegende Anmeldung betrifft wäßrige Wachsdispersionen, die partiell oxidierte Wachse enthalten, ein Verfahren zur Herstellung derartiger Dispersionen und deren Verwendung als Textilhilfsmittel.

Wäßrige Wachsdispersionen finden seit langer Zeit eine vielfältige Verwendung auf unterschiedlichsten Anwendungsgebieten. Als Beispiele seien nur genannt Bodenpflegemittel, Polituren, Produkte zur Körperpflege, Lebensmittelbeschichtungen, Klebstoffe, Kunststoff-Gleitmitteladditive für Tinten- und Druckfarben, Avivagen für Textilien sowie Beschichtungen für Papier und andere Verwendungszwecke. Besonders im Bereich der Textilausrüstung bzw. der Herstellung von synthetischen Fasern und Garne finden derartige Dispersionen breite Verwendung, beispielsweise als Textilhilfsmittel, wie Mittel zur Verbesserung der Vernähbarkeit.

Um Wachse überhaupt dispergieren zu können, müssen diese nach dem Fachmann bekannten Methoden zumindest partiell oxidiert werden. Derartige Verfahren werden beispielsweise in der DE 30 03 851 A1 beschrieben. Die Ausgangswachse werden dabei in Gegenwart von Luft, Sauerstoff oder Ozon, häufig in Gegenwart geeigneter Katalysatoren, oxidiert. Die dabei im Wachs entstehenden hydrophilen Hydroxyl-, Carbonyl- und Carboxylgruppen ermöglichen, in Kombination mit geeigneten Emulgatoren eine Dispergierung in Wasser.

Geeignete Wachse sind neben Paraffin-, Mikrowachsen und Fischer-Tropsch-Wachsen insbesondere die Polyethylenwachse. Dabei handelt es sich um synthetische Wachse mit Säurezahlen zwischen 10 und 40, wie sie beispielsweise in Ullmanns Encyklopädie der technischen Chemie, 4. Auflage, Band 24, Seiten 36 bis 45 beschrieben werden. Sie werden üblicherweise hergestellt durch Hochdruckpolymerisation von Ethylen in der Gegenwart vergleichsweise hoher Mengen an Molmassenregler und anschließender Oxidation nach bekannten Verfahren in ihrer Schmelze mit Sauerstoff oder Luft. Die Polyethylenwachse können aber auch mit Hilfe der Niederdruckpolymerisation von Ethylen mit Ziegler-Katalysatoren und nachträglicher Oxidation mit Sauerstoff hergestellt werden. Im allgemeinen haben die oxidierten Polyethylenwachse ein mittleres Molekulargewicht *M̅*_{*w̅*} zwischen 500 und 50.000 d.

Bei derartigen Wachsdispersionen tritt allerdings häufig ein unangenehmer Geruch auf, der zu einer Ablehnung entsprechender Produkte in der Praxis führen kann. Dies ist insbesondere dann relevant, wenn die Wachsemulsionen beispielsweise auf Textilien oder in Körperpflegeprodukten eingesetzt werden sollen. Die Anmelderin hat sich daher das Problem gestellt, die Geruchsbelästigung derartiger Wachsdispersionen zu vermeiden. Die Anmelderin hat bei der näheren Untersuchung festgestellt, daß die Geruchsbelastung auf die in der Praxis üblichen Mitverwendung von geringen Mengen Natriumdisulfit bei der Herstellung der Dispersionen zurückzuführen ist. Dessen Einsatz wird damit begründet, daß bei der Oxidation der Wachse neben Hydroxyl- und Carboxylgruppen auch Carbonylfunktionen entstehen können, die auch eine schlechte Farbstabilität verursachen können. Durch Bildung von Bisulfit-Additionsverbindungen werden derartige Farbeinbußen in der Praxis verhindert. Verzichtet man nämlich auf den Zusatz von Disulfit, entstehen bei der Dispergierung derartiger Wachse später minderwertige grobteilige, instabile Emulsionen. Diese Problematik kann erfindungsgemäß dadurch umgangen werden, daß den Dispersionen spezifisch ausgewählte Additive im Austausch zum Natriumdisulfit zugesetzt werden.

In einer ersten Ausführungsform werden wäßrige, geruchsneutrale Wachsdispersion beansprucht, die partiell oxidierte Wachse, Emulgatoren und gegebenenfalls weitere Hilfs- und Zusatzstoffe enthalten, wobei die Dispersionen bei der Herstellung Elektrolyte zugesetzt werden.

Bei den Elektrolyten handelt es sich vorzugsweise um anorganische Salze, vorzugsweise aus der Gruppe der Alkali- und/oder Erdalkalisalze und insbesondere der Alkali- und/oder Erdalkalihalogenide. Besonders bevorzugt sind Wachsdispersionen, die Alkali- und/oder Erdalkalichloride und/oder sulfate enthalten. Überraschenderweise wurde gefunden, daß durch Zusatz derartiger Elektrolyte zu den an sich bekannten Wachsdispersionen im Austausch mit Disulfit, geruchsneutrale aber gleichzeitig auch ausreichend lagerstabile Dispersionen erhalten werden. Dabei reichen bereits geringe Mengen an Elektrolyten zur Erzielung der gewünschten Wirkung aus. Vorzugsweise enthalten die erfindungsgemäßen Dispersionen weniger als 3 Gew.-% an Elektrolyten. Bevorzugt sind Dispersionen, die 0,01 bis 2,5 Gew.-%, vorzugsweise 0,01 bis 1,5 Gew-% und insbesondere 0,5 bis 1,0 Gew.-%, bezogen auf die Dispersion, an Elektrolyten enthalten. Vorzugsweise enthalten die erfindungsgemäßen Dispersionen sogar weniger als 0,5 Gew.-% an Elektrolyt, insbesondere 0,01 bis 0,2 und ganz besonders bevorzugt 0,01 bis 0,1 Gew.-%, Besonders bevorzugte Elektrolyte sind ausgewählt aus der Gruppe Natriumchlorid, Natriumsulfat, Magnesiumchlorid und/oder Magnesiumsulfat.

Die Wachsdispersionen als solche sind dem Fachmann bekannt, wobei aber die erfindungsgemäßen Mittel frei von (Bi)Sulfitsalzen, insbesondere von Natriumdisulfit (Na₂S₂O₅) sind. Erfindungswesentlich ist es, daß bei der Herstellung der Dispersionen, also dem Vermischen der partiell oxidierten Wachse mit Wasser die Elektrolyte zugegen sind. Nur dann bilden sich die lagerstabilen, geruchsneutralen Dispersionen aus. Ein nachträgliches Zumischen von Elektrolyten hat dagegen nicht die erfindungsgemäße Wirkung.

Wäßrige Polyethylenwachsdispersionen gemäß dem Stand der Technik werden beispielsweise in der GB 2 281 316 A , der DE 41 29 494 A1 oder der DE 43 30 342 A1 beschrieben. Bezüglich der in den Dispersionen enthaltenen partiell oxidierten Wachsen können diese ausgewählt sein aus der Gruppe der Paraffinwachse, der Mikrowachse, der Fischer-Tropsch-Wachse und insbesondere der Polyethylenwachse. Zur weiteren Charakterisierung der Wachse sei kursorisch z.B. auf Kirk Othmer, Encyclopedia of Chemical Technology, 2. Edition, Volume 15, Seiten 92 bis 97 bzw. 99 bis 100 sowie auf Albin H. Warth, "The Chemistry and Technology of Waxes", 2. Edition, Reinhold Publishing Corp., New York, Seiten 377 bis 393 verwiesen. Besonders bevorzugt sind in den erfindungsgemäßen Dispersion partiell oxidierte Polyethylenwachse mit mittleren Molgewichten *M̅*_{*w̅*} von 100 bis 10.000 d, vorzugsweise 500 bis 8000 d und insbesondere von 1000 bis 8000 und besonders bevorzugt von 3000 bis 5000 d. Derartige Polyethylenwachse kommen in Form wäßriger Dispersionen in den Handel, die zwischen 20 und 50 Gew.-% an nicht-wäßriger Aktivsubstanz enthalten. Besonders bevorzugt sind die sogenannten high-density-(HD)Polyethylenwachse mit Dichten im Bereich von 0,96 bis 0,98 g/cm³. Ebenfalls geeignet sind Dispersionen auf Basis von low-Density-(LD)-Wachsen mit Dichten im Bereich von 0,94 bis 0,96 g/cm³.

Die in den erfindungsgemäßen Dispersionen verwendeten Wachse sollten vorzugsweise bestimmte Kennzahlen aufweisen. Hierbei sind insbesondere die Säurezahl, die Verseifungszahl, der Tropfpunkt und, als Indikator für die Härte, die Nadelpenetration von Bedeutung. Bevorzugte Werte sind dabei Säurezahlen (nach DIN 53169) im Bereich von 5 bis 65, vorzugsweise 10 bis 45 und insbesondere 10 bis 30, Verseifungszahlen im Bereich von 10 bis 100, vorzugsweise 20 bis 70 und insbesondere 25 bis 60, Tropfpunkte (gemessen nach ASTM D-3104-77) im Bereich von 85 bis 150 °C und eine Nadelpenetration (gemessen nach ASTM D-1321) von 0,1 bis 15, vorzugsweise 0,1 bis 5 und insbesondere 1 bis 5. Besonders bevorzugt sind solche Wachse, die alle oben genannten Kennzahlenkriterien erfüllen. Die Dichte der erfindungsgemäß eingesetzten Wachse liegt vorteilhafterweise im Bereich von 0,96 bis 1,00 g/cm³ und vorzugsweise im Bereich von 0,94 bis 0,98 g/cm³ - jeweils bei 20 °C.

Neben dem Wachs und den Elektrolyten sind in den erfindungsgemäßen Dispersionen anionische, kationische und/oder nichtionische Emulgatoren oder deren Mischungen enthalten. Besonders bevorzugt sind in diesem Zusammenhang nichtionische Emulgatoren, beispielsweise Fettsäureester von Alkoholen, Ethylenglycol, Polyethylenglycol, Propylenglycol, Glycerin, Polyglycerin, Sorbit, Pentaerythrit und Saccharose. Besonders bevorzugt sind Fettalkoholethoxylate des Kettenschnitts C8 bis C22, die mit 4 bis 40 Mol Ethylenoxid pro Mol Alkohol umgesetzt wurden. Besonders bevorzugt sind dabei solche Ethoxylate, die 12 bis 22 C-Atome enthalten und pro Mol Fettalkohol mit 1 bis 9 Mol Ethylenoxid umgesetzt wurden. Besonders bevorzugt sind Alkyl(oligo)glycoside (APG) und deren Derivate.

Weiterhin bevorzugt ist die Mitverwendung von kationischen Emulgatoren, die auch eine weichmachende Wirkung für Textilien haben können. Derartige Verbindungen sind vorzugsweise ausgewählt aus der Gruppe der quaternären Ammoniumverbindungen der allgemeinen Formel [R₄N]⁺ X⁻ in der R unabhängig voneinander für einen linearen oder verzweigten, gesättigten oder ungesättigten Alkylrest mit 1 bis 24 C-Atomen steht, wobei der Alkylrest ein- oder mehrfach durch Sauerstoffatome unterbrochen sein kann und/oder R für einen Hydroxyalkylrest mit 1 bis 6 C-Atomen steht und X⁻ ein Anion bedeutet. Verbindungen dieses Typs sind dem Fachmann bekannt. Solche geeigneten Verbindungen werden insbesondere in der EP 0 239 910 A1 beschrieben, wobei vor allem auf die Seiten 3 bis 9 und die dort in den Formeln (1) und (II) offenbarten Verbindungen verwiesen sei. Die Offenbarung dieses Dokuments ist auch Teil der Offenbarung der vorliegenden Anmeldung. Weiterhin könne mit organischen Säuren, wie Essig-, Glykol- und/oder Milchsäure neutralisierte Fettamine mit 12 bis 22 C-Atomen oder Fettaminethoxylate mit 12 bis 22 C-Atomen und 2 bis 25 Mol Ethylenoxid pro Mol Fettamin verwendet werden. Geeignet sind auch Fettamidoamine und deren Derivate.

Weitere geeignete Additive sind ausgewählt aus der Gruppe der Fettsäureamide, Fettamine, Fettsäurealkanolamide, kondensierte Amine, Polyamine, Fettsäuren, Fettsäureester, Fettamine, Fettsäurealkanolamine, Propylenglycole, Glycerin und Polyglycerine, Pentaerythrit, Sorbit, Sorbitanester, nicht-oxidierte Wachse, Ethylendiamin, Alkylphenol, kondensierte Phenole, Abietinsäure, kondensierte Amine, Lanolin, Bienenwachs, Phosphorsäureverbindungen und Polysiloxane. Im Falle nichtionischer oder anionischer Dispersionen empfiehlt sich der Zusatz von Alkalihydroxiden, vorzugsweise KOH in Mengen, die in etwa der Anzahl an freien Carboxylgruppen des Wachses äquivalent ist.

Die Emulgatoren sind in den erfindungsgemäß hergestellten Wachsemulsionen vorzugsweise in einer Menge von 5 bis 40 Gew.-%, insbesondere 10 bis 30 Gew.-% und besonders bevorzugt zwischen 15 und 25 Gew.-%, jeweils bezogen auf die gesamte Dispersion, enthalten. Werden jedoch kationische Emulgatoren wegen ihrer Eigenschaft als Textilweichmacher mitverwendet, so können diese in Mengen von 5 bis 60 Gew.-%, vorzugsweise 10 bis 50 Gew.-% enthalten sein.

Neben den bereits oben beschriebenen Inhaltsstoffen können die erfindungsgemäßen Wachsdispersionen auch noch weitere üblichen Inhaltsstoffe, insbesondere Komplexbildner auf Basis Phosphonsäure enthalten, welche auch die Farbqualität der Wachsemulsionen erhöhen können. Weiterhin können Schauminhibitoren, soil-release Polymere, nicht-wäßrige Lösungsmittel, wie Ethanol oder Propanol, Konservierungsmittel, Farbstoffe etc. enthalten sein. Bei Verwendung der Dispersionen für den nicht-industriellen Kunden, beispielsweise als Weichspülmittel, sind auch Parfümstoffe übliche Inhaltsstoffe. Die erfindungsgemäßen Wachsdispersionen weisen, bei nichtionischer Dispergierung vorzugsweise einen pH-Wert zwischen 7,0 und 11,0 auf. Bei kationische Dispersionen liegt der pH-Wert vorzugsweise bei 3,0 bis 6,0.

Die Herstellung der erfindungsgemäßen Wachsdispersionen kann nach allen, dem Fachmann bekannten Verfahren erfolgen, hierzu zählen sowohl das Wasser-in-Wachs als auch das Wachs-in-Wasser-Verfahren, die Niederdruck- sowie die Hochdruck-Emulgierung. Ein weiterer Gegenstand betrifft eine besonders vorteilhafte Ausgestaltung zur Herstellung von wäßrigen Wachsdispersionen gemäß obiger Beschreibung, wobei partielle oxidierten Wachse in Gegenwart von Elektrolyten und Emulgatoren und ggf. anderer Hilfs- und Zusatzstoffe bei Temperaturen von mindestens 80 °C dispergiert werden. Die notwendige Temperatur ergibt sich für den Fachmann ohne weiteres in Abhängigkeit vom Tropfpunkt der eingesetzten Wachse. Im hier vorgeschlagenen Verfahren werden die partiell oxidierten Wachse vorzugsweise bei Temperaturen von 100 bis 160° C, vorzugsweise bei 110 bis 150° C und dabei unter Druck mit Wasser und den anderen Bestandteilen emulgiert. Dies geschieht in Gegenwart von ausgewählten anorganischen Salzen, die vorzugsweise in Mengen von 0,001 bis 3,0 Gew.-%, bezogen auf die Menge an Wachs, im Verfahren eingesetzt werden. Die erfindungsgemäß hergestellten Wachsdispersionen zeigen vorteilhafterweise keine störenden Gerüche und sind lagerstabil.

Ein weiterer Gegenstand betrifft die Verwendung von Wachsdispersionen gemäß obiger Beschreibung als Textilhilfsmittel. Darunter werden Schlichtemittel, Nähfadenpräparationen, Knitterfestausrüstungen und Weichmachungsmittel verstanden. Besonders bevorzugt ist die Verwendung als Mittel zur Verbesserung der Nähbarkeit.

### Beispiele

Es wurden wie folgt drei Wachsemulsionen (1 und 2 erfindungsgemäß, 3 zum Vergleich) hergestellt.
1. Eine Mischung aus 182 g HD Polyethylenwachs (Säurezahl 30, Tropfpunkt 137 °C), 21 g Glykolsäure (70 Gew.-%), 55 g Talgamin-2- Ethylenoxid, 3,1 g Natriumsulfat und 0,4 g 1-Hydroxyethan-1,1-diphosphonsäure und 734 g Wasser wurden in einem druckdichten Behälter vorgelegt und dann auf 150 °C erhitzt. Die Mischung wurde 30 Minuten unter Druck bei der angegebenen Temperatur gerührt und dann abgekühlt, es wurde eine feinteilige, transluzente Emulsion mit schwachem Geruch nach Polyethylen (PE) -Wachs erhalten.
2. Eine Mischung aus 173 g HD Polyethylenwachs (Säurezahl 30, Tropfpunkt 137 °C), 12 g hydrierter Talgfettalkohol + 5 Ethylenoxid, 6 g Cetyl-/Stearylakohol + 20 Ethylenoxid, 1,0 g Natriumsulfat und 10 g N,N-Diethyl-N-hydroxyethylamin und 680 g Wasser wurden in einem druckdichten Behälter vorgelegt und dann auf 150 °C erhitzt. Die Mischung wurde 30 Minuten unter Druck bei der angegebenen Temperatur gerührt und dann abgekühlt. Es wurde eine feinteilige, transluzente Emulsion mit schwachem Geruch nach PE-Wachs erhalten.
3. Das Beispiel 1 wurde wiederholt, allerdings diesmal in Gegenwart von 3,1 g Natriumdisulfit anstatt des Natriumsulfats. Die erhaltene Dispersion wies einen penetranten, unangenehmen Geruch auf.

## Patentansprüche

1. Wässrige Wachsdispersion, enthaltend 10 bis 60 Gew. % partiell oxidierte Wachse, sowie Emulgatoren und gegebenenfalls weitere Hilfs- und Zusatzstoffe, **dadurch gekennzeichnet, dass** der Dispersion bei der Herstellung Alkali- und/oder Erdalkalihalogenide, insbesondere Alkali- und/oder Erdalkalichloride und/oder -sulfate als Elektrolyte zugesetzt werden.

2. Wachsdispersion nach Anspruch 1, **dadurch gekennzeichnet, dass** die Wachse ausgewählt sind aus der Gruppe der partiell oxidierten Fischer-Tropsch-Wachse, Paraffinwachse, Mikrowachse und/oder Polyethylenwachse.

3. Wachsdispersion nach den Ansprüchen 1 und 2, **dadurch gekennzeichnet, dass** die Wachse ausgewählt sind aus der Gruppe der high-density (HD) Polyethylenwachse.

4. Wachsdispersion nach den Ansprüchen 1 bis 3, **dadurch gekennzeichnet, dass** partiell oxidierte Polyethylenwachse mit mittleren Molgewichten von 100 bis 10.000 d, vorzugsweise 500 bis 8000 d und insbesondere von 3000 bis 5000 d enthalten sind.

5. Wachsdispersion nach den Ansprüchen 1 bis 4, **dadurch gekennzeichnet, dass** die partielle oxidierten Wachse Säurezahlen im Bereich von 5 bis 65, vorzugsweise 10 bis 45 und insbesondere 10 bis 30 aufweisen.

6. Wachsdispersion nach den Ansprüchen 1 bis 5, **dadurch gekennzeichnet, dass** die partiell oxidierten Wachse Verseifungszahlen im Bereich von 10 bis 100, vorzugsweise 20 bis 70 und insbesondere 25 bis 60 aufweisen.

7. Wachsdispersion nach den Ansprüchen 1 bis 6, **dadurch gekennzeichnet, dass** die partiell oxidierten Wachse Tropfpunkte (gemessen nach ASTM D-3104-77) im Bereich von 85 bis 150 °C und eine Nadelpenetration (gemessen nach ASTM D-1321) von 0,1 bis 15, vorzugsweise 0,1 bis 5 und insbesondere 1 bis 5 aufweisen.

8. Wachsdispersion nach den Ansprüchen 1 bis 8, **dadurch gekennzeichnet, dass** das die partiell oxidierten Wachse in Mengen von 20 bis 50 und insbesondere 25 bis 45 Gew.-% enthalten sind.

9. Wachsdispersion nach den Ansprüchen 1 bis 8, **dadurch gekennzeichnet, dass** die Elektrolyte in Mengen von 0,01 bis 2,5 Gew.-%, vorzugsweise 0,01 bis 1,5 Gew.-% und insbesondere 0,5 bis 1,0 Gew.-%, bezogen auf die Dispersion, bei deren Herstellung zugesetzt werden.

10. Wachsdispersion nach den Ansprüchen 1 bis 9, **dadurch gekennzeichnet, dass** als Emulgatoren anionischen, kationischen und/oder nichtionischen Emulgatoren enthalten sind.

11. Wachsdispersion nach den Ansprüchen 1 bis 10, **dadurch gekennzeichnet, dass** als weitere Zusatzstoffe kationische Tenside, ausgewählt aus der Gruppe der quaternären Ammoniumverbindungen der allgemeinen Formel [R₄N]⁺ X⁻ in der R unabhängig voneinander für einen linearen oder verzweigten, gesättigten oder ungesättigten Alkylrest mit 1 bis 24 C-Atomen steht, wobei der Alkylrest ein- oder mehrfach durch Sauerstoffatome unterbrochen sein kann und/oder R für einen Hydroxyalkylrest mit 1 bis 6 C-Atomen steht und X⁻ ein Anion bedeutet..

12. Wachsdispersion nach den Ansprüchen 1 bis 11, **dadurch gekennzeichnet, dass** als weitere Hilfsstoffe Komplexbildner, vorzugsweise Alkali- und/oder Erdalkalihydrogenphosphate, enthalten sind.

13. Verfahren zur Herstellung von wässrigen Wachsdispersionen nach Anspruch 1, **dadurch gekennzeichnet, dass** die partielle oxidierten Wachse in Gegenwart von Elektrolyten und Emulgatoren bei Temperaturen von mindestens 80 °C dispergiert werden.

14. Verfahren nach Anspruch 13, **dadurch gekennzeichnet, dass** die partiell oxidierten Wachse bei Temperaturen von 100 bis 160 °C, vorzugsweise von 110 bis 150 °C und unter Druck mit Wasser dispergiert werden.

15. Verwendung von wässrigen Wachsdispersionen nach Anspruch 1 als Textilhilfsmittel.

## Claims

1. Aqueous was dispersion containing 10 to 60% by weight partially oxidized waxes and also emulsifiers and, optionally, other auxiliaries and additives, **characterized in that** alkali metal and/or alkaline earth metal halides, more particularly alkali metal and/or alkaline earth metal chlorides, and/or sulfates are added as electrolytes to the dispersion during its production.

2. Wax dispersion as claimed in claim 1, **characterized in that** the waxes are selected from the group of partially oxidized Fischer-Tropsch waxes, paraffin waxes, microwaxes and/or polyethylene waxes.

3. Wax dispersion as claimed in claims 1 and 2, **characterized in that** the waxes are selected from the group of high-density (HD) polyethylene waxes.

4. Wax dispersion as claimed in claims 1 to 3, **characterized in that** it contains partially oxidized polyethylene waxes with average molecular weights of 100 to 10,000 d, preferably 5,000 to 8,000 d and more particularly 3,000 to 5,000 d.

5. Wax dispersion as claimed in claims 1 to 4, **characterized in that** the partially oxidized waxes have acid values of 5 to 65, preferably 10 to 45 and more particularly 10 to 30.

6. Wax dispersion as claimed in claims 1 to 5, **characterized in that** the partially oxidized waxes have saponification values of 10 to 100, preferably 20 to 70 and more particularly 25 to 60.

7. Wax dispersion as claimed in claims 1 to 6, **characterized in that** the partially oxidized waxes have dropping points (as measured to ASTM D-3104-77) in the range from 85 to 150°C and a needle penetration (as measured to ASTM D-1321) of 0.1 to 15, preferably 0.1 to 5 and more particularly 1 to 5.

8. Wax dispersion as claimed in claims 1 to 8, **characterized in that** the partially oxidized waxes are present in quantities of 20 to 50 and more particularly 25 to 45% by weight.

9. Wax dispersion as claimed in claims 1 to 8, **characterized in that** the electrolytes are added to the dispersion during its production in quantities of 0.01 to 2.5% by weight, preferably 0.01 to 1.5% by weight and more particularly 0.5 to 1.0% by weight, based on the dispersion.

10. Wax dispersion as claimed in claims 1 to 9, **characterized in that** anionic, cationic and/or nonionic emulsifiers are present as emulsifiers.

11. Wax dispersion as claimed in claims 1 to 10, **characterized in that** cationic surfactants selected from the group of quaternary ammonium compounds with the general formula [R₄N]⁺ X⁻, in which the Rs independently of one another represent a linear or branched, saturated or unsaturated C₁₋₄ alkyl group, the alkyl group being interrupted one or more times by oxygen atoms, and/or R is a C₁₋₆ hydroxyalkyl group and X⁻ is an anion, are present as further additives.

12. Wax dispersion as claimed in claims 1 to 11, **characterized in that** complexing agents, preferably alkali metal and/or alkaline earth metal hydrogen phosphates, are present as further auxiliaries.

13. A process for the production of aqueous wax dispersions as claimed in claim 1, **characterized in that** the partially oxidized waxes are dispersed in the presence of electrolytes and emulsifiers at temperatures of at least 80°C.

14. A process as claimed in claim 13, **characterized in that** the partially oxidized waxes are dispersed with water under pressure at temperatures of 100 to 160°C and preferably at temperatures of 110 to 150°C.

15. The use of the aqueous dispersions claimed in claim 1 as textile auxiliaries.

## Revendications

1. Dispersion de cires aqueuse, contenant 10 à 60 % en poids de cires partiellement oxydées, ainsi que des émulsifiants et, le cas échéant, d'autres excipients et additifs,
**caractérisée en ce qu'**
on ajoute à la dispersion, lors de la préparation, des halogénures alcalins et/ou alcalino-terreux, en particulier des chlorures et/ou des sulfates alcalins et/ou alcalino-terreux en tant qu'électrolytes.

2. Dispersion de cires selon la revendication 1,
**caractérisée en ce que**
les cires sont choisies dans le groupe des cires de Fischer-Tropsch partiellement oxydées, des cires de paraffine, des microcires et/ou des cires de polyéthylène.

3. Dispersion de cires selon les revendications 1 et 2,
**caractérisée en ce que**
les cires sont choisies dans le groupe des cires de polyéthylène haute densité (HD).

4. Dispersion de cires selon les revendications 1 à 3,
**caractérisée en ce qu'**
elles contiennent des cires de polyéthylène partiellement oxydées ayant des poids moléculaires moyens de 100 à 10 000 d, de préférence de 500 à 8 000 d et, en particulier de 3 000 à 5 000 d.

5. Dispersion de cires selon les revendications 1 à 4,
**caractérisée en ce que**
les cires partiellement oxydées présentent des indices d'acide de l'ordre de 5 à 65, de préférence de 10 à 45 et, en particulier de 10 à 30.

6. Dispersion de cires selon les revendications 1 à 5,
**caractérisée en ce que**
les cires partiellement oxydées présentent des indices de saponification de l'ordre de 10 à 100, de préférence de 20 à 70 et, en particulier, de 25 à 60.

7. Dispersion de cires selon les revendications 1 à 6,
**caractérisée en ce que**
les cires partiellement oxydées présentent des points de goutte (mesurés selon la norme ASTM D-3104-77) de l'ordre de 85 à 150 °C et une pénétrabilité à l'aiguille (mesurée selon la norme ASTM D-1321) de 0,1 à 15, de préférence de 0,1 à 5 et, en particulier de 1 à 5.

8. Dispersion de cires selon les revendications 1 à 8,
**caractérisée en ce qu'**
elles contiennent les cires partiellement oxydées dans des quantités de 20 à 50 et, en particulier de 25 à 45 % en poids.

9. Dispersion de cires selon les revendications 1 à 8,
**caractérisée en ce que**
les électrolytes sont ajoutés dans des quantités de 0,01 à 2,5 % en poids, de préférence de 0,01 à 1,5 % en poids et, en particulier de 0,5 à 1,0 % en poids, par rapport à la dispersion, lors de la préparation de celle-ci.

10. Dispersion de cires selon les revendications 1 à 9,
**caractérisée en ce qu'**
elle contient, comme émulsifiants, des émulsifiants anioniques, cationiques et/ou non ioniques.

11. Dispersion de cires selon les revendications 1 à 10,
**caractérisée en ce qu'**
elle contient, comme autres additifs, des tensioactifs cationiques, choisis dans le groupe des composés d'ammonium quaternaire de formule générale [R₄N]⁺ X⁻, dans laquelle les radicaux R représentent indépendamment les uns des autres, un radical alkyle linéaire ou ràmifié, saturé ou insaturé, comportant 1 à 24 atomes de carbone, le radical alkyle pouvant être interrompu une ou plusieurs fois par des atomes d'oxygène et/ou les radicaux R représentent un radical hydroxyalkyle comportant 1 à 6 atomes de carbone, et X⁻ représente un anion.

12. Dispersion de cires selon les revendications 1 à 11,
**caractérisée en ce qu'**
elle contient, comme autres agents auxiliaires des agents complexants, de préférence des hydrogénophosphates alcalins et/ou alcalino-terreux.

13. Procédé de préparation de dispersions de cires aqueuses selon la revendication 1,
**caractérisé en ce que**
les cires partiellement oxydées sont dispersées en présence d'électrolytes et d'émulsifiants à des températures d'au moins 80 °C.

14. Procédé selon la revendication 13,
**caractérisé en ce que**
les cires partiellement oxydées sont dispersées avec de l'eau à des températures de 100 à 160 °C, de préférence de 110 à 150 °C et sous pression.

15. Utilisation de dispersions de cires aqueuses selon la revendication 1, en tant qu'adjuvants pour textiles.
